# EUROPÄISCHE PATENTANMELDUNG

(11) **EP 1 039 289 A2**
(43) Veröffentlichungstag der Anmeldung: **27.09.2000**
(21) Anmeldenummer: 00103196.2
(22) Anmeldetag: 17.02.2000
(51) Int. Cl.: G01N 15/02

(54) **Verfahren und Einrichtung zur Bestimmung der Geschwindigkeit und der Grösse von Partikeln**

(30) Priorität: 16.03.1999 DE 19911654
(71) Anmelder: Parsum -Gesellschaft für Partikel-, Strömungs- und Umweltmesstechnik mbH, 09125 Chemnitz (DE)
(72) Erfinder: Dietrich, Stefan, Dipl.-Ing., 09128 Chemnitz (DE); Eckardt, Günter, Dr.-Ing., 09116 Chemnitz (DE); Köhler, Michael, Dr.-Ing., 09353 Oberlungwitz (DE); Petrak, Dieter, Dr.-Ing. habil., 99425 Weimar (DE)
(74) Vertreter: Körtel, Günther H., Dr.-Ing. Pat.-Ing.

(57) **Zusammenfassung**

Die Erfindung betrifft ein Verfahren zur Bestimmung der Geschwindigkeit und der Größe von Partikeln in transparenten Medien oder im Vakuum, wobei die Partikeln in einem Meßvolumen mit Primärlicht beleuchtet werden und das durch die Partikeln reflektierte Licht oder deren Schattenbild auf Lichtempfangsmittel abgebildet wird, mit ersten Lichtempfangsmitteln, deren erste Ausgangssignale der Bestimmung der Geschwindigkeit, und einem zweiten Lichtempfangsmittel, dessen zweite Ausgangssignale der Bestimmung der Größe der Partikeln dienen, und eine Einrichtung zur Durchführung des Verfahrens.

Aufgabe ist es, eine einheitliche und kombinierte Gewinnung und Auswertung der Ausgangssignale für die Bestimmung von Partikelgeschwindigkeit und - größe bei geringerem technischen Aufwand und höherer Genauigkeit zu ermöglichen.

Erfindungsgemäß wird unter Weglassung des zweiten Lichtempfangsmittels mindestens eines der ersten Lichtempfangsmittel (4; 5) auch zur Gewinnung der Ausgangssignale (11; 12) für die Bestimmung der Größe (s) der Partikeln (3) verwendet.

Das Anwendungsgebiet der Erfindung ist die berührungslose Bestimmung von Geschwindigkeit und Größe von bewegten Partikeln, wie festen, flüssigen oder gasförmigen Teilchen, in transparenten Medien, insbesondere in Gas- oder Flüssigkeitsströmungen oder im Vakuum.

## Beschreibung

Die Erfindung betrifft ein Verfahren zur Bestimmung der Geschwindigkeit und der Größe von Partikeln in transparenten Medien oder im Vakuum, wobei die Partikeln in einem Meßvolumen mit Primärlicht beleuchtet werden und das durch die Partikeln reflektierte Licht oder deren Schattenbild auf Lichtempfangsmittel abgebildet wird, mit ersten Lichtempfangsmitteln, deren erste Ausgangssignale der Bestimmung der Geschwindigkeit, und einem zweiten Lichtempfangsmittel, dessen zweite Ausgangssignale der Bestimmung der Größe der Partikeln dienen, und eine Einrichtung zur Durchführung des Verfahrens.

Das Anwendungsgebiet der Erfindung ist die berührungslose Bestimmung von Geschwindigkeit und Größe von bewegten Partikeln, wie festen, flüssigen oder gasförmigen Teilchen, in transparenten Medien, insbesondere in Gas- oder Flüssigkeitsströmungen oder im Vakuum. Dabei ist eine kontinuierliche Bestimmung von Partikelgeschwindigkeit und -größe ohne Probennahme z. B. im Rahmen von verfahrenstechnischen Stoffstromprozessen auch bei höheren Partikelkonzentrationen mit einer hohen Datenrate möglich.

Aus DE-OS 41 18 716 sind ein Verfahren und eine Anordnung zur optischen Erfassung und Auswertung von Streulichtsignalen zwecks Bestimmung der Geschwindigkeit, der Flugrichtung und der Größe von Partikeln bekannt. Ein entsprechend ausgestaltetes Strichgitter-Anemometer erzeugt ein Ausgangssignal, dessen Schwebungsfrequenz hinsichtlich der Partikelgeschwindigkeit und dessen Amplitudenverhältnis hinsichtlich der Partikelgröße ausgewertet wird.

Bei dieser Lösungsmöglichkeit sind jedoch der geräte- und verfahrenstechnische sowie der Auswertungsaufwand erheblich und die Partikelgrößenbestimmung ist mit großen Unsicherheiten verbunden. Darüber hinaus schränkt die ausschließliche Auswertung von Streulichtsignalen die Anwendbarkeit hinsichtlich der Partikelgröße ungünstigerweise ein.

Es sind weiterhin bereits Verfahren und Einrichtungen der eingangs genannten Art bekannt.

In DD-PS 142 606 sind ein Verfahren und eine Meßsonde für Teilchengeschwindigkeits-, Teilchengrößen- und Teilchenkonzentrationsverteilungen beschrieben. Dabei werden die in einem Strömungsmittel befindlichen Partikeln innerhalb eines Meßvolumens mit dem Licht einer Beleuchtungseinrichtung beleuchtet und das durch die Partikel reflektierte Licht oder deren Schattenbild wird auf einer Ortsfrequenzfilteranordnung abgebildet. Diese besteht aus in einer optischen Wirkungsfläche mündenden gitterartig angeordneten Lichtwellenleitern, speziell flexiblen Lichtleitfasern, welche ausgangsseitig auf eine optoelektronische Wandleranordnung und nach Verstärkung auf einen Frequenzanalysator geleitet sind.

Die Frequenzanalyse des wechselspannungsartigen Ausgangssignals der Wandleranordnung führt zur Bestimmung der dominierenden Frequenz, woraus unter Verwendung der Gitterkonstanten und ggf. eines Abbildungsmaßstabs die Partikelgeschwindigkeit bestimmt wird.

Zwecks Ermittlung der Partikelgröße ist der Ortsfrequenzfilteranordnung eine zusätzliche Lichtleitfaser zugefügt, die auf einen gesonderten optoelektronischen Wandler und Verstärker geführt ist. Wird die Lichtempfangsfläche dieser zusätzlichen Lichtleitfaser durch das vom reflektierten Licht oder Schattenbild einer Partikel verursachte optische Signal getroffen, so wird ein Impuls erzeugt. Aus dessen zeitlicher Breite kann nun unter Einbezug der Partikelgeschwindigkeit (Komponente in der Haupt-Bewegungsrichtung der Partikeln), des Durchmessers der Lichtempfangsfläche der zusätzlichen Lichtleitfaser und ggf. eines Abbildungsmaßstabs die Partikelgröße (Komponente in der Haupt-Bewegungsrichtung der Partikeln) bestimmt werden.

Die aus DD-PS 142 606 bekannte Meßsonde wurde gemäß DE-PS 196 28 348 weiter entwickelt. Dabei ist der lichtführende Querschnitt der zusätzlichen Lichtleitfaser deutlich kleiner ausgeführt als der jeweilige Querschnitt der in der optischen Wirkungsfläche der Ortsfrequenzfilteranordnung mündenden Lichtwellenleiter, wobei die Beleuchtungseinrichtung eine Parallelprojektion oder eine optische Abbildung der Partikeln auf die um die zusätzliche Lichtleitfaser erweiterte Ortsfrequenzfilteranordnung ermöglicht. Diese Verbesserung gestattet unter weiterer Verwendung des grundsätzlichen Meßprinzips eine Erhöhung der Genauigkeit der Partikelgrößenbestimmung vor allem durch eine höhere Genauigkeit der Auswertung der durch die zusätzliche Lichtleitfaser (in Verbindung mit der Beleuchtungseinrichtung und dem optoelektronischen Wandler) erzeugten Impulsbreite.

Eine weitere Verbesserung der nach dem genannten Meßprinzip arbeitenden Meßsonde ist in DE-GM 298 04 156 beschrieben.

Dieses bekannte Meßprinzip der Kombination einer Ortsfrequenzfilteranordnung für die Geschwindigkeitsbestimmung mit einer zusätzlichen lichtwellenleitenden Elementanordnung zur Größenbestimmung beinhaltet jedoch sowohl verfahrens- als auch einrichtungsseitig einige Nachteile.

So ist die Anwendung des Ortsfrequenzfilterverfahrens für die berührungslose Partikelgeschwindigkeitsmessung - als Voraussetzung für die berührungslose Partikelgrößenbestimmung - infolge der aufwendigen und damit relativ langsamen Auswertung sowie der unterschiedlichen Auswertetechnik der Ausgangssignale mit Nachteilen verbunden. Die Burstauswertung mittels Frequenzanalyse erfolgt bei modernen Losungen mit Hilfe von Näherungsverfahren, vor allem mittels Fast-Fourier-Transformation im Computer unter Nutzung aufwendiger Software (vergl. D. Petrak et al.: Faseroptische Ortsfilter-Anemometrie - ein lokales Meßverfahren für Mehrphasenströmungen, Technisches Messen 56 (1989) 2, 72 - 83), so daß die Dynamik der Meßwertermittlung durch eine relativ langsame softwaregesteuerte Auswertung eingeschränkt ist. Dabei steht der analogen Auswertung des Bursts hinsichtlich der Partikelgeschwindigkeit eine digitale Auswertung des von der zusätzlichen lichtwellenleitenden Elementanordnung gelieferten Impulses hinsichtlich der Impulsdauer (Impulsbreite) gegenüber. Demgemäß sind der Aufbau der Meßsonde und der hard- und softwaremäßige Aufwand für die unterschiedliche Auswertung der verschiedenen Ausgangssignale relativ aufwendig und damit teuer.

Nachteilig ist dabei auch, daß i. d. R. das Ausgangssignal der Ortsfrequenzfilteranordnung insbesondere aufgrund deren räumlicher Ausdehnung und der Signalverarbeitung von anderen Partikeln verursacht wird als das Ausgangssignal der zusätzlichen lichtwellenleitenden Elementanordnung, so daß die Partikelgrößenbestimmung mit mehr oder weniger großen Fehlern behaftet ist.

Anordnungsseitig steht die Anwendung der Ortsfrequenzfiltertechnik der weiter erforderlichen Miniaturisierung der Meßsonden entgegen. Insbesondere erfordert ein Ortsfrequenzfilter, vor allem in Differenzanordnung, eine relativ lange Meßzeile, z. B. bestehend aus den in der optischen Wirkungsfläche mündenden Lichtleitfasern bestimmter Anzahl, um eine hinreichende Burstausbildung zu erreichen. Das führt jedoch notwendigerweise zu einer relativ großen sensitiven Empfangsfläche, wodurch die Meßsondengröße beeinflußt wird.

Darüber hinaus ist die genaue Herstellung von faseroptischen Ortsfrequenzfiltern aufwendig, kostenintensiv und problematisch. Da im Realfall der als Gitterkonstante bezeichnete Abstand zwischen den einzelnen Gitterelementen von Element zu Element verschieden ist, muß er durch Ausmessung bestimmt werden, wonach die Gitterkonstante des Ortsfrequenzfilters durch Mittelwertbildung errechnet wird. Dieser Mittelwert beinhaltet jedoch naturgemäß einen unterschiedlich großen Fehler bezüglich des jeweils tatsächlichen Abstands, was die Genauigkeit des Meßergebnisses hinsichtlich der Partikelgeschwindigkeit und damit auch der -größe beeinflußt.

Nachteilig ist weiterhin die z. T. erhebliche Fehlermöglichkeit bei größeren Partikelkonzentrationen im Medium, wodurch Koinzidenzen von Partikeln im Meßvolumen auftreten können. Um zu sichern, daß sich über dem Ortsfrequenzfilter jeweils nur eine Partikel bewegt, darf eine relativ geringe Partikelkonzentration nicht überschritten werden. Ansonsten sind aufwendige Auswertungsalgorithmen (mit ihren weiteren Nachteilen hinsichtlich der Auswertungsgeschwindigkeit) erforderlich und es läßt sich nur eine relativ geringe Meßrate erzielen.

In Anbetracht der Nachteile des bekannten Standes der Technik liegt der Erfindung die Aufgabe zugrunde, ein Verfahren und eine Einrichtung zur Durchführung des Verfahrens der eingangs genannten Art zu schaffen, wobei eine einheitliche und kombinierte Gewinnung und Auswertung der Ausgangssignale für die Bestimmung von Partikelgeschwindigkeit und -größe bei geringerem technischen Aufwand und höherer Genauigkeit erfolgt.

Diese Aufgabe wird verfahrensgemäß durch die Merkmale des kennzeichnenden Teils des Patentanspruchs 1 gelöst, wobei vorteilhafte Ausgestaltungen in den Unteransprüchen 2 bis 4 beschrieben sind.

Die Aufgabe wird einrichtungsgemäß durch die Merkmale des kennzeichnenden Teils des Patentanspruchs 5 gelöst. Aus- und Weiterbildungen sind in den Unteransprüchen 6 bis 14 beschrieben.

Das erfindungsgemäße ausgestaltete Verfahren und die erfindungsgemäße Einrichtung gestatten die Realisierung einer einheitlichen und kombinierten Gewinnung der Ausgangssignale für die Bestimmung von Partikelgeschwindigkeit und -größe sowie deren Auswertung bei einem geringen technischen Aufwand sowie bei Sicherung einer höheren Genauigkeit. Insbesondere wird für die Gewinnung der Ausgangssignale zur Partikelgeschwindigkeitsbestimmung keine Ortsfrequenzfilteranordnung mit ihren erläuterten Nachteilen hinsichtlich Herstellung, Platzbedarf, Auswertung, Genauigkeit benötigt, d. h. die Lichtempfangsmittel für die Geschwindigkeitsbestimmung können wesentlich einfacher ausgeführt sein und gleichzeitig der Erzeugung von Ausgangssignalen für die Partikelgrößenbestimmung dienen. Damit ist das Vorsehen von zweiten (zusätzlichen) Lichtempfangsmitteln für die Partikelgrößenbestimmung unnötig.

Vorteilhafterweise dienen die von einer Partikel verursachten Ausgangssignale der ersten Lichtempfangsmittel einer ersten Zeitmessung zur Bestimmung der Partikelgeschwindigkeit. Gleichzeitig werden die von derselben Partikel verursachten Ausgangssignale eines der ersten Lichtempfangsmittel für eine zweite Zeitmessung zur Bestimmung der Partikelgröße verwendet. Mit dieser Verfahrensweise sind selektive Partikelmessungen mit vergleichsweise hoher Genauigkeit möglich. Die Auswertung der Ausgangssignale kann nach einer einheitlichen Technologie erfolgen, wobei eine einheitliche digitale Auswertung der Signale besonders zweckmäßig ist. Dadurch sind der Hard- und Softwareaufwand sowie der Zeitbedarf für die Auswertung gegenüber dem bekannten Stand erheblich verringert. Die Anwendung aufwendiger Näherungsverfahren ist nicht mehr nötig.

Vorteilhafterweise wird die erste Zeitmessung durch die Vorderflanke eines von einem ersten Lichtempfangsmittel ausgegebenen ersten Impulses gestartet und durch die Vorderflanke eines von einem weiteren ersten Lichtempfangsmittel ausgegebenen zweiten Impulses gestoppt. Die zweite Zeitmessung wird durch die Vorderflanke des ersten oder eines zweiten Impulses gestartet und durch die jeweilige Rückflanke desselben Impulses gestoppt. Dabei erfolgt der jeweilige Start der Zeitmessung zwischen erstem und zweitem Impuls bzw. zwischen Vorder- und Rückflanke von der gleichen Partikel und der gleichen Impulsflanke, d. h. vom gleichen physikalischen Ereignis, so daß eine hohe Korrelation zwischen den Meßwerten erreichbar ist.

Zur Erhöhung der Meßsicherheit können mehr als zwei erste Lichtempfangsmittel angeordnet sein und demgemäß mehrere erste und mehrere zweite Zeitmessungen durchgeführt werden, wobei eine Mittelwertbildung der gemessenen Zeiten der Geschwindigkeits- und Größenbestimmung zugrunde gelegt wird.

In zweckmäßiger Ausgestaltung der erfindungsgemäßen Einrichtung bestehen die ersten Lichtempfangsmittel aus einer Anordnung von mindestens zwei Lichtempfängern, denen je ein optoelektronischer Wandler zugeordnet ist. Die Lichtempfangsflächen der Lichtempfänger sitzen in einer optischen Wirkungsfläche, die das Meßvolumen einseitig begrenzt. Ihr Abstand voneinander ist definiert, wobei eine die Lichtempfangsflächen verbindende (gedachte) Abstandslinie parallel zur (Haupt)-Bewegungsrichtung der Partikeln verläuft. In der einfachsten Ausführung sind demgemäß zwei Lichtempfänger für die Durchführung einer ersten und einer zweiten Zeitmessung vorgesehen, während in aufwendigeren Ausführungen mehr als zwei Lichtempfänger angeordnet sind, so daß mehrere erste und/oder mehrere zweite Zeitmessungen bei Mittelwertbildung realisierbar sind.

Mit dieser Ausgestaltung ist bei geringstem Herstellaufwand und einfachster Herstellungs- und Auswertetechnologie die Realisierung von Meßsonden zur kombinierten Messung von Geschwindigkeit und Größe von (bewegten) Partikeln möglich. Dabei können kleinste sensitive optische Empfangsflächen mit ihren vorteilhaften Auswirkungen auf Genauigkeit und Sondengestaltung verwirklicht werden. Insbesondere ist dadurch die Realisierung kleinerer Durchmesser der Meßvolumina möglich, wodurch kleinere freie Weglängen zwischen den Partikeln höhere Partikelkonzentrationen im Medium zulassen, bei denen noch zuverlässig ohne Koinzidenzeffekte sichere Meßwerte erzielbar sind. Dadurch können hohe Meßraten und insgesamt eine verbesserte Meßdynamik der Meßeinrichtung realisiert werden.

Die erfindungsgemäße Ausgestaltung erlaubt die Ausführung verschiedener Anordnungen und Gestaltungen der Lichtempfänger zur Verwirklichung verschiedener Anwendungsmöglichkeiten. So ist in einer Variante die kreisförmige Lichtempfangsfläche eines ersten Lichtempfängers von einer kreisringförmigen Lichtempfangsfläche eines zweiten Lichtempfängers konzentrisch umgeben, wobei erster und zweiter Lichtempfänger jeweils auf einen optoelektronischen Wandler geführt ist. Mit dieser Anordnung ist eine richtungsunabhängige Erfassung der Ausgangssignale und demgemäß eine richtungsunabhängige Bestimmung von Geschwindigkeit und Größe möglich.

Besteht in einer weiteren Variante die kreisringförmige Lichtempfangsfläche aus einzelnen Lichtempfängern, denen jeweils gesonderte optoelektronische Wandler zugeordnet sind, so kann mit dieser Ausführung die Bewegungsrichtung der Partikeln zweidimensional bestimmt werden.

Bei den vorgenannten Ausgestaltungen können die Lichtempfänger sowohl als Lichtwellenleiter, insbesondere aus flexiblen Lichtleitfasern hergestellt sein, die jeweils auf optoelektronische Wandler geführt sind. Besonders zweckmäßig sind jedoch die Lichtempfänger selbst als optoelektronische Wandler, z. B. als Fotodioden- oder CCD-Anordnung ausgeführt.

Zwecks Auswertung der optischen Signale, die durch Reflexion von Licht durch im Meßvolumen befindliche Partikeln verursacht werden, ist die Beleuchtungseinrichtung zweckmäßig in der optischen Wirkungsfläche angeordnet, beispielsweise durch den Einsatz von Beleuchtungslichtleitfasern. Eine besonders vorteilhafte Ausgestaltung besteht darin, daß die als Lichtwellenleiter ausgeführten Lichtempfänger selbst die Beleuchtungseinrichtung bilden, wobei eine Lichtquelle über optische Y-Koppler in beide Lichtempfänger richtungsselektiv eingekoppelt ist.

Zwecks Auswertung des von den Partikeln verursachten Schattenbildes ist gegenüber der optischen Wirkungsfläche - unter Einschluß des Meßvolumens - eine Beleuchtungseinrichtung zur Erzeugung von parallelem Primärlicht angeordnet.

In weiterer zweckmäßiger Ausgestaltung ist die entsprechende Anordnung von Beleuchtungseinrichtung und Lichtempfängern in einer Meßsonde untergebracht, so daß das gesamte System mit geringstem Aufwand in einen Prozeß- bzw. Meßraum (z. B. Kanal, Rohrleitung) einbringbar ist.

Die Erfindung wird nachfolgend an zwei Ausführungsbeispielen und einigen Varianten näher erläutert. In der zugehörigen Zeichnung zeigen:
- Fig. 1: die schematische Ansicht einer erfindungsgemäßen Einrichtung, wobei das Schattenbild von in einer Strömung enthaltenen Partikeln erfaßt wird,
- Fig. 2: die Ansicht in Richtung des Pfeils II in Fig. 1,
- Fig. 3: die von den Lichtempfängern detektierten Ausgangssignale in idealisierter Form,
- Fig. 4: eine andere Variante analog zu Fig. 2,
- Fig. 5: eine weitere Variante analog zu Fig. 2,
- Fig. 6: die schematische Ansicht eines zweiten Ausführungsbeispiels, wobei das von den Partikeln reflektierte Licht erfaßt wird.

In den Ausführungsbeispielen wird zunächst die jeweilige erfindungsgemäße Einrichtung dargestellt. Anhand deren Arbeitsweise wird anschließend das erfindungsgemäße Verfahren erläutert.

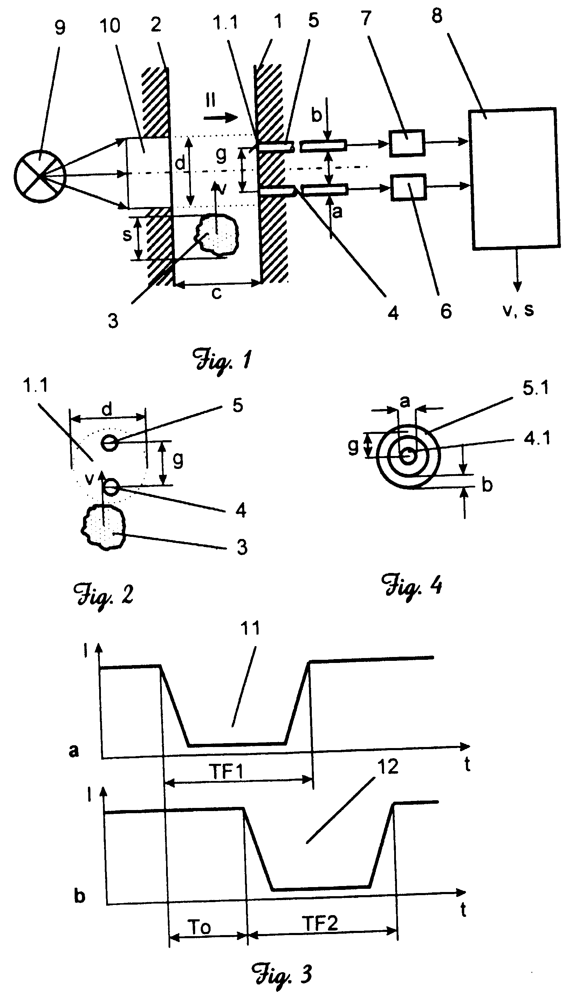

Entsprechend dem ersten Ausführungsbeispiel (Fig. 1 und 2) bewege sich eine Wasserströmung durch einen Spalt der Breite c, der durch die Wandflächen 1 und 2 gebildet ist. Durch die Wasserströmung werden Partikeln 3 der Abmessung/Größe s mit der Geschwindigkeit v fortbewegt.

Die Meßeinrichtung für die kombinierte Bestimmung von Geschwindigkeit v und Größe s der Partikeln 3 ist in den Wandflächen 1, 2 integriert, so daß die Strömung weitestgehend ungestört ist. In der Wandfläche 1 münden als flexible Lichtleitfasern ausgeführte Lichtwellenleiter 4 und 5 der Dicke a und b. Deren kreisförmige Lichtempfangsflächen sitzen in der Wandfläche 1, wodurch ein mit dem (später erläuterten) Durchmesser d eingegrenzter Bereich einer optischen Wirkungsfläche 1.1 gebildet ist (s. Fig. 2).

Die Lichtempfangsflächen beider Lichtwellenleiter 4, 5 besitzen voneinander einen definierten Abstand g, dessen (gedachte) Abstandslinie parallel zur durch den Geschwindigkeitsvektor v bestimmten (Haupt)-Bewegungsrichtung der Partikeln 3 verläuft (s. Fig. 2).

Ausgangsseitig sind die Lichtwellenleiter 4 und 5 auf je einen optoelektronischen Wandler 6, 7 geführt, welche mit einer Auswerteeinrichtung 8 verbunden sind. Diese dient der Berechnung und Ausgabe von Partikelgeschwindigkeit v und -größe s. Lichtwellenleiter 4, 5 und zugeordnete optoelektronische Wandler 6, 7 sollen im Ausführungsbeispiel die Lichtempfangsmittel darstellen. In nicht gezeichneten Varianten können diese auch selbst und unmittelbar als optoelektronische Wandler (z. B. Fotodioden) ausgeführt sein.

Der optischen Wirkungsfläche 1.1 gegenüber ist in der Wandfläche 2 eine Beleuchtungseinrichtung angeordnet. Diese besteht aus einer Lichtquelle 9 und einer Parallelisierungsoptik 10, wodurch ein die Wasserströmung im Spalt durchdringendes paralleles Lichtbündel erzeugt wird. Durch dieses Lichtbündel wird ein Meßvolumen mit dem Durchmesser d und der Breite c definiert, welches unmittelbar an die optische Wirkungsfläche 1.1 angrenzt.

Die Arbeitsweise ist wie folgt:

Bei der Bewegung einer Partikel 3 mit der Wasserströmung durch das Meßvolumen mit der Geschwindigkeit v erzeugt diese unter der Beleuchtung durch die Beleuchtungseinrichtung (Lichtquelle 9 mit Parallelisierungsoprik 10) ein Schattenbild, welches auf der optischen Wirkungsfläche 1.1 abgebildet wird. Demgemäß wird zeitlich nacheinander zunächst die Lichtempfangsfläche des Lichtwellenleiters 4 und anschließend die Lichtempfangsfläche des Lichtwellenleiters 5 schattiert. Durch diese optischen Signale werden am Ausgang des Lichtwellenleiters 4 ein erster Impuls 11 (Fig. 3 a) und am Ausgang des Lichtwellenleiters 5 ein zweiter Impuls 12 (Fig. 3 b) erzeugt, deren Laufzeitdifferenz To, im konkreten Ausführungsbeispiel die Zeitdifferenz To zwischen der Vorderflanke des ersten Impulses 11 und der Vorderflanke des zweiten Impulses 12, im Rahmen einer ersten Zeitmessung gemessen wird. Dieses erfolgt nach Wandlung der optischen Signale in elektrische Signale mit Hilfe der optoelektronischen Wandler 6, 7 in der Auswerteeinrichtung 8. In dieser wird anschließend die Geschwindigkeit v unter Verwendung des definierten Abstands g zwischen beiden Lichtempfangsflächen der Lichtwellenleiter 4, 5 nach bekannter Beziehung berechnet und gespeichert bzw. ausgegeben/angezeigt.

Die Bestimmung der Partikelgröße s erfolgt gleichfalls unter Nutzung des von der (gleichen) Partikel 3 verursachten optischen Signals durch Ermittlung der zeitlichen Breite TF1 des ersten Impulses 11 oder der zeitlichen Breite TF2 des zweiten Impulses 12 innerhalb einer zweiten Zeitmessung nach Wandlung der optischen in elektrische Signale durch die optoelektronischen Wandler 6, 7 in der Auswerteeinrichtung 8. Daraus wird anschließend die Partikelgröße s durch Verrechnung mit der Partikelgeschwindigkeit v und mit der Dicke a des Lichtwellenleiters 4 (bei Verwendung des ersten Impulses 11) bzw. der Dicke b des Lichtwellenleiters 5 (bei Verwendung des zweiten Impulses 12) nach bekannten Beziehungen berechnet, ausgegeben bzw. angezeigt.

In einer nicht gezeichneten Variante zum ersten Ausführungsbeispiel sind zwecks weiterer Erhöhung der Meßsicherheit die Lichtempfangsflächen von n Lichtwellenleitern 4, 5 ... m in der optischen Wirkungsfläche 1.1 angeordnet und mit optoelektronischen Wandlern 6, 7 ... o verbunden, so daß eine Partikel 3 bei ihrer (beleuchteten) Trajektorie durch das Meßvolumen n Impulse 11, 12 ... erzeugt. Die erste Zeitmessung für die Ermittlung der Zeitdifferenz To erfolgt dabei durch Bildung des Mittelwertes aus n - 1 Zeitdifferenzen zwischen den n Impulsen, wodurch ein Mittelwert für die Partikelgeschwindigkeit v bestimmbar ist. Die zweite Zeitmessung für die Ermittlung der zeitlichen Breite TF erfolgt durch Mittelwertbildung der einzelnen Impulsbreiten TF1 - TFn, woraus ein Mittelwert der Partikelgröße s (ggf. unter Verwendung der jeweiligen Dicke a, b ... der Lichtwellenleiter 4, 5, ... m) errechenbar ist.

Sofern die Lichtempfangsflächen in einer weiteren Variante nicht wie in Fig. 2 dargestellt ausgefuhrt sind, sondern entsprechend Fig. 4, kann eine Richtungsabhängigkeit der Meßeinrichtung weitgehend vermieden werden. Dabei ist die kreisförmige Lichtempfangsfläche eines (ersten) Lichtwellenleiters 4.1 konzentrisch umgeben von der kreisringförmigen Lichtempfangsfläche eines (zweiten) rohrförmigen Lichtwellenleiters 5.1. Der Lichtwellenleiter 4.1 besitzt wieder die Dicke a, während die Dicke b des rohrförmigen Lichtwellenleiters 5.1 durch dessen radiale Kreisring- bzw. Rohrdicke bestimmt ist. Der Abstand g zwischen beiden Lichtwellenleitern entspricht dem radialen Maß zwischen dem Zentrum und dem mittleren Kreisringdurchmesser. Beide Lichtwellenleiter 4.1, 5.1 sind analog zum ersten Ausführungsbeispiel auf die optoelektronischen Wandler 6, 7 geführt, so daß sich grundsätzlich eine analoge Arbeitsweise hinsichtlich erster und zweiter Zeitmessung ergibt. Jedoch wird nach vorliegender Variante jede Lage des Geschwindigkeitsvektors v in der Zeichenebene der Fig. 4 erfaßt, so daß die bisherige Einschränkung der Bestimmung von Geschwindigkeit und Größe bezüglich der Haupt-Bewegungsrichtung der Partikeln 3 entfällt.

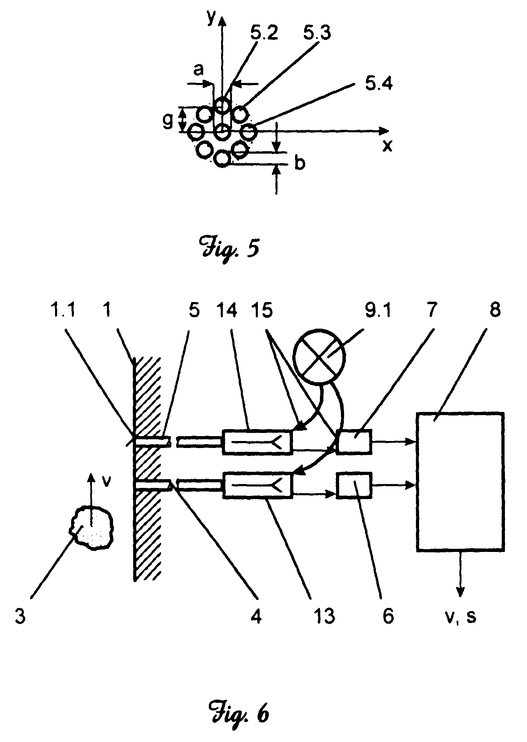

In einer abweichenden Variante gemäß Fig. 5 kann die kreisringförmige Lichtempfangsfläche des (zweiten) Lichtwellenleiters aus einer Mehrzahl von Lichtwellenleitern 5.2, 5.3 ... bestehen, wobei jeder dieser Lichtwellenleiter 5.2, 5.3 ... auf einen gesonderten optoelektronischen Wandler 7.1, 7.2 ... (nicht dargestellt) geführt ist. Diese Ausführungsvariante ermöglicht die selektive Erkennung der Bewegungsrichtung jeder Partikel 3 in der Zeichenebene der Fig. 5 (x, y-Koordinatensystem) und damit die dementsprechende Bestimmung von Geschwindigkeit v und Größe s.

Wenngleich auch die kreisringförmige Gestaltung der Lichtempfangsflächen lt. Fig. 4 und 5 besonders zweckmäßig ist, sind jedoch im Rahmen der Erfindung auch andere Formen möglich und realisierbar.

Gemäß eines zweiten Ausführungsbeispiels (Fig. 6) ist zwecks Erfassung der von bewegten Partikeln 3 reflektierten optischen Signale die Beleuchtungseinrichtung in der optischen Wirkungsfläche 1.1 angeordnet. Dazu sind in einer vorteilhaften Ausführungsform den Lichtwellenleitern 4, 5 optische Y-Koppler 13, 14 zugeordnet, über die eine Lichtquelle 9.1 unter Verwendung von Lichtleitfasern 15 richtungsselektiv eingekoppelt ist.

Dadurch erfolgt die Beleuchtung der Partikeln 3 über die Lichtwellenleiter 4, 5. Die reflektierten optischen Signale werden von denselben Lichtwellenleitern 4, 5 empfangen und an die optoelektronischen Wandler 6, 7 weitergeleitet.

Die Auswertung der Ausgangssignale erfolgt analog zum ersten Ausführungsbeispiel, so daß auf weitere Erläuterungen verzichtet werden kann.

Diese Ausführungsvariante ermöglicht eine besonders kleine Sondenbauform und ist deshalb für bestimmte Anwendungsfälle mit ausgesprochen hohen Genauigkeitsanforderungen zweckmäßig.

## Patentansprüche

1. Verfahren zur Bestimmung der Geschwindigkeit und der Größe von Partikeln in transparenten Medien oder im Vakuum, wobei die Partikeln in einem Meßvolumen mit Primärlicht beleuchtet werden und das durch die Partikeln reflektierte Licht oder deren Schattenbild auf Lichtempfangsmittel abgebildet wird, mit ersten Lichtempfangsmitteln, deren erste Ausgangssignale der Bestimmung der Geschwindigkeit, und einem zweiten Lichtempfangsmittel, dessen zweite Ausgangssignale der Bestimmung der Größe der Partikeln dienen,
dadurch gekennzeichnet, daß unter Weglassung des zweiten Lichtempfangsmittels mindestens eines der ersten Lichtempfangsmittel (4; 5) auch zur Gewinnung der Ausgangssignale (11; 12) für die Bestimmung der Größe (s) der Partikeln (3) verwendet wird.

2. Verfahren nach Anspruch 1, dadurch gekennzeichnet, daß die von einer Partikel (3) verursachten ersten Ausgangssignale (11; 12) der ersten Lichtempfangsmittel (4; 5) einer ersten Zeitmessung zur Bestimmung der Partikelgeschwindigkeit (v) dienen und die von derselben Partikel (3) verursachten Ausgangssignale (11; 12) eines ersten Lichtempfangsmittels (4; 5) für eine zweite Zeitmessung zur Bestimmung der Partikelgröße (s) verwendet werden.

3. Verfahren nach Anspruch 1 und 2, dadurch gekennzeichnet, daß die erste Zeitmessung durch die Vorderflanke eines von einem ersten Lichtempfangsmittel (4) ausgegebenen ersten Impulses (11) gestartet und durch die Vorderflanke eines von einem weiteren ersten Lichtempfangsmittel (5) ausgegebenen zweiten Impulses (12) gestoppt wird, während die zweite Zeitmessung durch die Vorderflanke des ersten oder eines zweiten Impulses (11; 12) gestartet und durch die jeweilige Rückflanke desselben Impulses (11; 12) gestoppt wird.

4. Verfahren nach Anspruch 1 bis 3, dadurch gekennzeichnet, daß die erste und/oder die zweite Zeitmessung eine Mittelwertbildung mehrerer Zeitmessungen einschließt.

5. Einrichtung zur Bestimmung der Geschwindigkeit und der Größe von Partikeln in transparenten Medien oder im Vakuum, wobei die Partikeln in einem Meßvolumen mit Primärlicht einer Beleuchtungseinrichtung beleuchtet werden und das durch die Partikeln reflektierte Licht oder deren Schattenbild auf Lichtempfangsmittel abgebildet wird, mit ersten Lichtempfangsmitteln, deren von optoelektronischen Wandlern erzeugte erste Ausgangssignale der Bestimmung der Geschwindigkeit, und einem zweiten Lichtempfangsmittel, dessen von einem optoelektronischen Wandler erzeugte zweite Ausgangssignale der Bestimmung der Größe der Partikeln dienen,
dadurch gekennzeichnet, daß unter Weglassung des zweiten Lichtempfangsmittels von mindestens einem der ersten Lichtempfangsmittel (4; 5) auch die Ausgangssignale (11; 12) für die Bestimmung der Größe (s) der Partikeln (3) gewinnbar sind.

6. Einrichtung nach Anspruch 5, dadurch gekennzeichnet, daß die ersten Lichtempfangsmittel aus einer Anordnung von mindestens zwei Lichtempfängern (4; 5) besteht, deren Lichtempfangsflächen in definiertem Abstand (g) voneinander so in einer das Meßvolumen begrenzenden optischen Wirkungsfläche (1.1) sitzen, daß eine die Lichtempfangsflächen verbindende gedachte Abstandslinie parallel zur (Haupt)-Bewegungsrichtung der Partikeln (3) verläuft, und jedem Lichtempfänger (4; 5) ein optoelektronischer Wandler (6; 7) zugeordnet ist.

7. Einrichtung nach Anspruch 5, dadurch gekennzeichnet, daß die ersten Lichtempfangsmittel aus einer Anordnung von zwei Lichtempfängern (4.1, 5.1) besteht, deren Lichtempfangsflächen in einer das Meßvolumen begrenzenden optischen Wirkungsfläche (1.1) sitzen, wobei eine vorzugsweise kreisförmige Lichtempfangsfläche des ersten Lichtempfängers (4.1) konzentrisch von einer vorzugsweise kreisringförmigen Lichtempfangsfläche des zweiten Lichtempfängers (5.1) umgeben ist, und jedem Lichtempfänger (4.1; 5.1) ein optoelektronischer Wandler (6; 7) zugeordnet ist.

8. Einrichtung nach Anspruch 5 und 7, dadurch gekennzeichnet, daß die vorzugsweise kreisringförmige Lichtempfangsfläche des zweiten Lichtempfängers aus einzelnen Lichtempfängern (5.2; 5.3; 5.4...) besteht, denen jeweils gesonderte optoelektronische Wandler (7.1; 7.2; 7.3...) zugeordnet sind.

9. Einrichtung nach Anspruch 5 und 6 oder 7 oder 8, dadurch gekennzeichnet, daß die Lichtempfänger als Lichtwellenleiter (4; 5) ausgeführt sind, welche auf optoelektronische Wandler (6; 7) geführt sind.

10. Einrichtung nach Anspruch 5 und 6 oder 7 oder 8, dadurch gekennzeichnet, daß die Lichtempfänger selbst optoelektronische Wandler sind.

11. Einrichtung nach Anspruch 5 und einem oder mehreren der Ansprüche 6 bis 10, dadurch gekennzeichnet, daß zwecks Auswertung des von den Partikeln (3) reflektierten Lichts die Beleuchtungseinrichtung zur Erzeugung von parallelem Primärlicht in der optischen Wirkungsfläche (1.1) angeordnet ist.

12. Einrichtung nach Anspruch 11, dadurch gekennzeichnet, daß die als Lichtwellenleiter ausgeführten Lichtempfänger (4; 5) selbst die Beleuchtungseinrichtung bilden, indem eine Lichtquelle (9.1) über optische Y-Koppler (13; 14) in beide Lichtempfänger (4; 5) richtungsselektiv eingekoppelt ist.

13. Einrichtung nach Anspruch 5 und einem oder mehreren der Ansprüche 6 bis 10, dadurch gekennzeichnet, daß zwecks Auswertung des von den Partikeln (3) verursachten Schattenbildes der optischen Wirkungsfläche (1.1) unter Einschluß des Meßvolumens gegenüber die Beleuchtungseinrichtung (9; 10) zur Erzeugung von parallelem Primärlicht angeordnet ist.

14. Einrichtung nach Anspruch 5 und einem oder mehreren der Ansprüche 6 bis 13, gekennzeichnet durch ihre Anordnung in einer Meßsonde.
